# EUROPEAN PATENT APPLICATION

(11) **EP 4 667 667 A1**
(43) Date of publication of application: **24.12.2025**
(21) Application number: 24779466.2
(22) Date of filing: 13.03.2024
(51) Int. Cl.: E02F 9/26, E02F 9/22

(54) **WHEEL LOADER**

(30) Priority: 31.03.2023 JP 2023058912
(71) Applicant: Hitachi Construction Machinery Co., Ltd., Tokyo 110-0015 (JP)
(72) Inventor: TSUTSUMI Yoshiaki, Tsuchiura-shi, Ibaraki 300-0013 (JP); KOTAKA Toshio, Tsuchiura-shi, Ibaraki 300-0013 (JP); TANAKA Tetsuji, Tsuchiura-shi, Ibaraki 300-0013 (JP); ITOU Kazuyuki, Tsuchiura-shi, Ibaraki 300-0013 (JP)
(74) Representative: Manitz Finsterwald Patent- und Rechtsanwaltspartnerschaft mbB
(86) International application number: PCT/JP2024/009787
(87) International publication number: WO 2024/203337

(57) **Abstract**

In the wheel loader 1 where the operation of the bucket 23 is automatically controlled by the controller 5, the controller 5 outputs an automatic tilt command signal to the hydraulic drive device 402 in a case where it determines that the decrease amount Wd of the load weight in the bucket 23 associated with the unloading operation has reached the target discharge amount Wt, in a case where it is determined that the decrease amount Wd has not reached the target discharge amount Wt, the controller selects the command signal with the smaller forward tilt angle amount of the bucket 23 from among the first automatic dump command signal that commands the first automatic dump operation and the dump command signal that commands a dump operation in which the bucket 23 tilts forward by an angle amount different from the first angle amount, and outputs it to the hydraulic drive device 402.

## Description

### Technical Field

The present invention relates to a wheel loader equipped with a system that assists in loading excavated materials to a loading target.

### Background Art

One of the work vehicles that performs loading operations by excavating earth and sand, or minerals and loading them into a loading target such as a dump truck or hopper is a wheel loader. In loading operations, the operator of the wheel loader is required to adjust the weight of the excavated material discharged from the bucket so as not to exceed the loading weight required by the loading target. In the case of a wheel loader, depending on the posture of the bucket and lift arm, it is difficult for the operator seated in the operator's seat to see inside the bucket, making it challenging to perform loading operations while adjusting the discharge weight from the bucket. Therefore, a technology is known in which the controller controls the operation of the bucket to assist the operator's loading operation.

For example, in Patent Document 1, the controller performs a dump operation command to tilt the bucket forward once until the difference between the weight of the excavated material and the remaining loading weight reaches a predetermined threshold, and after the difference between the weight of the excavated material and the remaining loading weight reaches the predetermined threshold, it repeatedly performs the dump operation command, the tilt operation command to tilt the bucket backward, and the weighing command to stop the bucket and measure the weight. This discloses a wheel loader that enables precise loading of excavated material with the target loading weight into a dump truck.

### Citation List

### Patent Literature

Patent Literature 1: U.S. Patent No. 11,174,618

### Summary of the Invention

### Technical Problem

However, in the control of the controller described in Patent Document 1, during the series of operations to discharge excavated material from the bucket, the tilt operation, which is the opposite of the dump operation, is intervened, and the bucket is automatically stopped to measure the weight. Therefore, it gives a sense of discomfort to the operator who is only executing the dump operation of the bucket. Moreover, since the bucket repeatedly performs the dump operation, tilt operation, and stopping of the operation, the load on the hydraulic drive device that drives the bucket becomes large.

Therefore, the object of the present invention is to provide a wheel loader that enables precise loading of the target loading weight to the loading target while reducing the sense of discomfort given to the operator and the load on the hydraulic drive device.

### Solution To Problem

To achieve the above object, the wheel loader of the present invention comprises a vehicle body, a working device attached at the front of the vehicle body, a bucket attached to the tip of the working device, a hydraulic drive device for driving the bucket, a power source for driving the hydraulic drive device, a weight sensor for detecting the weight in the bucket, a controller for performing bucket automatic control to automatically control the operation of the bucket based on the weight detected by the weight sensor, and an automatic control start operation device for the controller to start the processing related to the bucket automatic control. The controller, upon acquiring the start command signal of the bucket automatic control output from the automatic control start operation device, calculates the decrease amount in the weight of the work object in the bucket accompanying the unloading operation based on the weight of the work object detected by the weight sensor. Then, it determines whether the calculated decrease amount has reached the target discharge amount of the bucket, and in a case where it is determined that the calculated decrease amount has reached the target discharge amount, it outputs an automatic tilt command signal to tilt the bucket backward to the hydraulic drive device. If it is determined that the calculated decrease amount has not reached the target discharge amount, it selects the command signal with the smaller angle amount of forward tilt of the bucket from the preset first automatic dump command signal that commands the first automatic dump operation where the bucket automatically tilts forward by a predetermined first angle amount, and the dump command signal that commands the dump operation where the bucket tilts forward by an angle amount different from the first angle amount, and outputs it to the hydraulic drive device to control the bucket.

### Advantageous Effects of Invention

According to the present invention, it is possible to accurately load the target loading weight to the loading target while reducing the sense of discomfort given to the operator and the load on the hydraulic drive device. Problems, configurations, and effects other than those described above will be clarified by the description of the following embodiments.

### Brief Description of Drawings

[FIG. 1] is an external side view showing an example configuration of a wheel loader according to each embodiment of the present invention.
[FIG. 2] is a perspective view of the wheel loader shown in FIG. 1 as seen from the front left side.
[FIG. 3] is a system configuration diagram showing an example configuration of the drive system of the wheel loader.
[FIG. 4] is a functional block diagram showing the functions of the controller according to the first embodiment of the present invention.
[FIG. 5] is a flowchart showing the processing flow executed by the controller according to the first embodiment of the present invention.
[FIG. 6] is a functional block diagram showing the functions of the controller according to the second embodiment of the present invention.
[FIG. 7] is a flowchart showing the processing flow executed by the controller according to the second embodiment of the present invention.
[FIG. 8] is a functional block diagram showing the functions of the controller according to the third embodiment of the present invention.
[FIG. 9] is a flowchart showing the processing flow executed by the controller according to the third embodiment of the present invention.
[FIG. 10] is a functional block diagram showing the functions of the controller according to the fourth embodiment of the present invention.
[FIG. 11] is a flowchart showing the processing flow executed by the controller according to the fourth embodiment of the present invention.
[FIG. 12] is a functional block diagram showing the functions of the controller according to the fifth embodiment of the present invention.
[FIG. 13] is a flowchart showing the processing flow executed by the controller according to the fifth embodiment of the present invention.

### Description Of Embodiments

### [Overall Configuration of Wheel Loader 1]

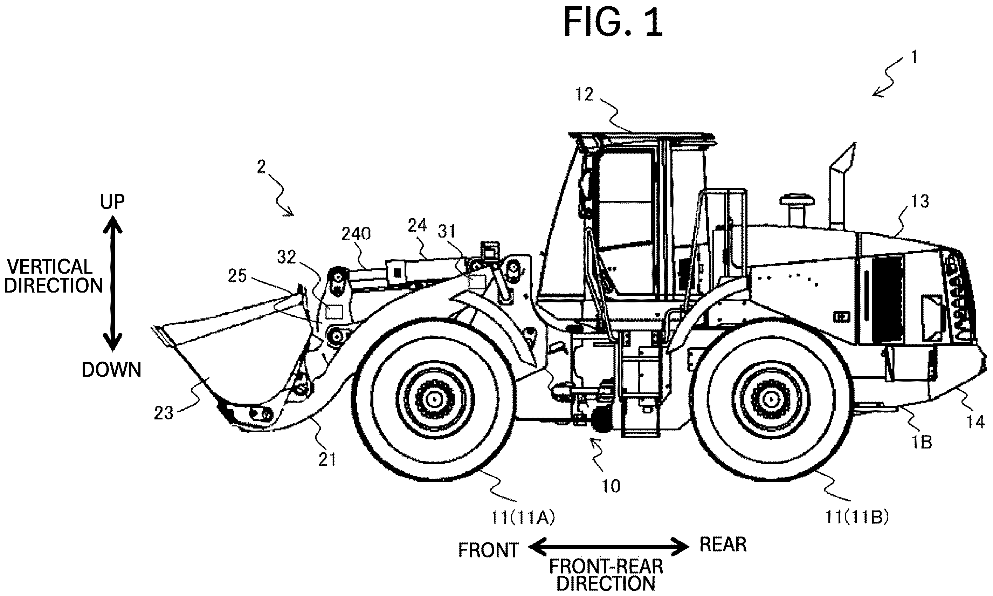

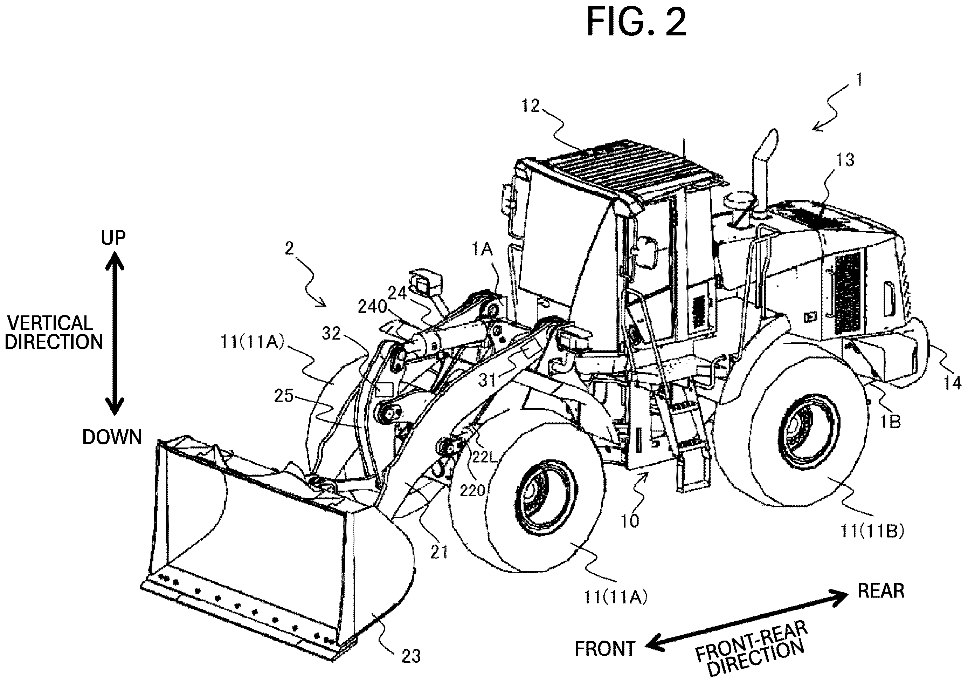

First, the overall configuration of the wheel loader 1 according to each embodiment of the present invention will be described with reference to FIGS. 1 and 2.

FIG. 1 is an external side view showing an example configuration of the wheel loader 1 according to each embodiment of the present invention. FIG. 2 is a perspective view of the wheel loader 1 shown in FIG. 1 as seen from the front left side.

The wheel loader 1 is an articulated work vehicle that is steered by the vehicle body bending near the center, and the front frame 1A, which becomes the front part of the vehicle body, and the rear frame 1B, which becomes the rear part of the vehicle body, are rotatably connected in the left-right direction by a center joint 10, and the front frame 1A bends in the left-right direction relative to the rear frame 1B. In the following description, the direction to the left relative to the forward direction of the vehicle body is referred to as the ""left direction,"" and the direction to the right relative to the forward direction is referred to as the ""right direction.""

The vehicle body is attached with four wheels 11, with two wheels 11 attached as front wheels 11A on both the left and right sides of the front frame 1A, and the remaining two wheels 11 attached as rear wheels 11B on both the left and right sides of the rear frame 1B. In FIG. 1, only the front wheel 11A and rear wheel 11B attached on the left side of the four wheels 11 are shown, and in FIG. 2, only the left and right front wheels 11A and the left rear wheel 11B of the four wheels 11 are shown.

A hydraulic drive type working device 2 for performing loading work by excavating work objects such as earth and sand, or minerals and loading them into a loading target such as a dump truck or hopper is attached to the front part of the front frame 1A.

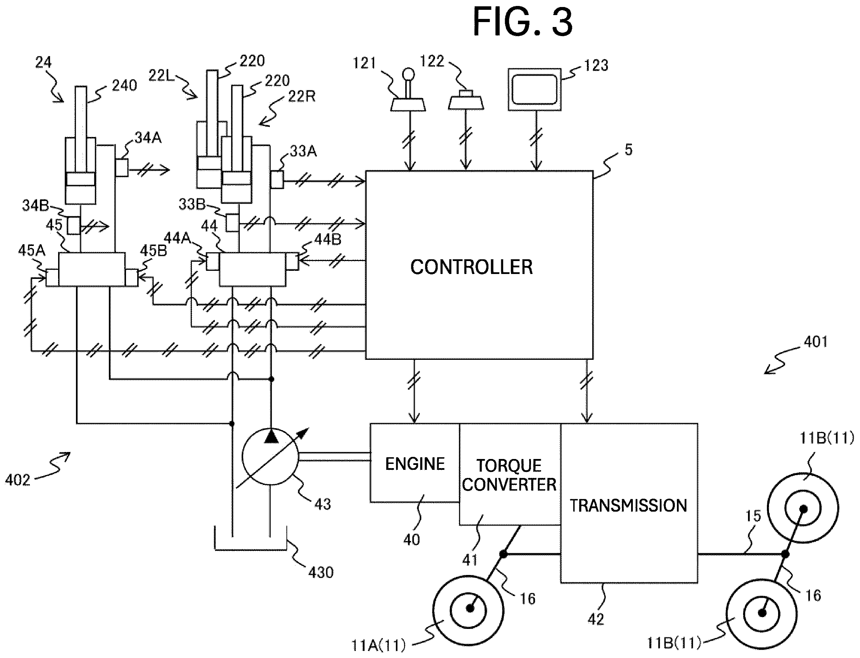

The working device 2 includes a lift arm 21, which is mounted on the front frame 1A to be rotatable in the vertical direction, two lift arm cylinders 22L, 22R (see FIG. 3) as hydraulic cylinders for driving the lift arm 21, a bucket 23 mounted at the tip part of the lift arm 21 to be rotatable in the vertical direction, a bucket cylinder 24 as a hydraulic cylinder for driving the bucket 23, and a bell crank 25 that is rotatably connected to the lift arm 21 to form a link mechanism with the bucket 23 and the bucket cylinder 24.

The two lift arm cylinders 22L, 22R are arranged side by side with a predetermined interval in the lateral direction of the vehicle body. However, in FIG. 1, they are not shown as they are positioned hidden by the front wheel 11A on the left side, and in FIG. 2, only the left lift arm cylinder 22L is shown.

The lift arm 21 rotates upward relative to the front frame 1A as each rod 220 of the two lift arm cylinders 22L, 22R extends, and rotates downward relative to the front frame 1A as each rod 220 of the two lift arm cylinders 22L, 22R compresses.

Additionally, at the base end part of the lift arm 21 (the attachment part with the front frame 1A), a lift arm angle sensor 31 is attached to detect the lift arm angle, which is the angle formed between the vehicle body's ground contact surface (the ground where the four wheels 11 are in contact) and the lift arm 21.

The bucket 23 rotates upward relative to the lift arm 21 and tilts backward toward (tilt operation) the front frame 1A (vehicle body) side as the rod 240 of the bucket cylinder 24 extends, and rotates downward relative to the lift arm 21 and tilts forward (dump operation) as the rod 240 of the bucket cylinder 24 compresses. This allows the bucket 23 to scoop and discharge (excavate and unload) work objects such as earth and sand or minerals.

The bucket 23 can be replaced with various attachments such as a blade, and the wheel loader 1 can perform various tasks such as snow removal work and dozing work in addition to loading work using the bucket 23.

The angle of the bucket 23, which is the angle formed between the ground contact surface of the vehicle body and the bottom section of the bucket 23, can be calculated based on the lift arm angle and the bell crank angle, which is the inclination angle of the bell crank 25 relative to the front frame 1A. The bell crank angle is detected by a bell crank angle sensor 32 attached to the bell crank 25. The lift arm angle sensor 31 and the bell crank angle sensor 32 are each an embodiment of a bucket posture sensor that detects the posture of the bucket 23.

The rear frame 1B is installed with an operating room 12 where the operator boards, a machine room 13 that houses various equipment necessary for driving the wheel loader 1, and a counterweight 14 to maintain balance with the working device 2 to prevent the vehicle body from tilting. In the rear frame 1B, the operating room 12 is positioned at the front, the counterweight 14 at the rear, and the machine room 13 is positioned between the operating room 12 and the counterweight 14.

In this wheel loader 1, it is possible to operate the working device 2 by two methods: manual operation by the operator and automatic control by a controller 5 (see FIG. 3) described later.

### [Drive System of Wheel Loader 1]

Next, the drive system of the wheel loader 1 will be described with reference to FIG. 3.

FIG. 3 is a system configuration diagram showing an example configuration of the drive system of the wheel loader 1.

The wheel loader 1 is controlled in its travel by a torque converter type travel device 401, and the operation of the working device 2 is controlled by a hydraulic drive device 402.

The travel device 401 includes an engine 40, a torque converter 41 connected to the output shaft of the engine 40, and a transmission 42 connected to the output shaft of the torque converter 41. These engine 40, torque converter 41, and transmission 42 are each controlled by a controller 5.

The engine 40 is started by the operator turning on the ignition switch attached in the operating room 12, and then rotates as the operator depresses the accelerator pedal. The speed of the engine 40 is proportional to the amount the accelerator pedal is depressed, increasing as the pedal is depressed further.

The torque converter 41 has the function of amplifying the torque transmitted from the engine 40 and transmitting it to the transmission 42, and the output torque increases as the speed of the input shaft (the speed of the output shaft of the engine 40) is greater relative to the speed of the output shaft.

The transmission 42 is an automatic transmission composed of a clutch mechanism with multiple clutches and a gear mechanism with multiple speed gears, which switches the forward and reverse movement of the vehicle body and changes the speed of the output shaft of the torque converter 41. The speed changed by the transmission 42 is transmitted to the four wheels 11 via the drive shaft 15 and axle 16, allowing the wheel loader 1 to travel.

The hydraulic drive device 402 includes an engine 40, a hydraulic pump 43 driven by the engine 40, a hydraulic fluid tank 430 for storing hydraulic fluid, a lift arm directional control valve 44 attached between the hydraulic pump 43 and the two lift arm cylinders 22, a bucket directional control valve 45 attached between the hydraulic pump 43 and the bucket cylinder 24, a pair of lift arm electromagnetic control valves 44A, 44B for controlling the lift arm directional control valve 44, and a pair of bucket electromagnetic control valves 45A, 45B for controlling the bucket directional control valve 45.

As shown in FIG. 3, the engine 40 is a power source for driving the travel device 401 and the hydraulic drive device 402.

The hydraulic pump 43 supplies hydraulic fluid to each of the two lift arm cylinders 22 and the bucket cylinder 24. In FIG. 3, the hydraulic pump 43 is shown as a variable displacement hydraulic pump, but it does not necessarily have to be variable displacement and may be a fixed displacement type.

The lift arm directional control valve 44 controls the flow (direction and flow rate) of hydraulic fluid discharged from the hydraulic pump 43 and guided to each of the two lift arm cylinders 22L, 22R. Similarly, the bucket directional control valve 45 controls the flow (direction and flow rate) of hydraulic fluid discharged from the hydraulic pump 43 and guided to the bucket cylinder 24.

The lift arm electromagnetic control valves 44A, 44B and the bucket electromagnetic control valves 45A, 45B are each controlled by the controller 5.

For example, when a drive command signal related to the raising operation of the lift arm 21 is output from the controller 5 to the lift arm electromagnetic control valves 44A, 44B, the lift arm electromagnetic control valves 44A, 44B control the operation of the lift arm directional control valve 44 to connect the hydraulic pump 43 with the bottom chambers of the two lift arm cylinders 22L, 22R. As a result, the hydraulic fluid discharged from the hydraulic pump 43 flows into the bottom chambers of the two lift arm cylinders 22L, 22R, causing each rod 220 to extend and the lift arm 21 to operate upward.

Conversely, when a drive command signal related to the lowering operation of the lift arm 21 is output from the controller 5 to the lift arm electromagnetic control valves 44A, 44B, the lift arm electromagnetic control valves 44A, 44B control the operation of the lift arm directional control valve 44 to connect the hydraulic pump 43 to the rod chambers of the two lift arm cylinders 22L, 22R. As a result, the hydraulic fluid discharged from the hydraulic pump 43 flows into the rod chambers of the two lift arm cylinders 22L, 22R, causing each rod to compress and the lift arm 21 to operate downward.

Also, for example, when a drive command signal related to the tilt operation (backward tilt operation) of the bucket 23 is output from the controller 5 to the bucket electromagnetic control valves 45A, 45B, the bucket electromagnetic control valves 45A, 45B control the operation of the bucket directional control valve 45 to connect the hydraulic pump 43 to the bottom chamber of the bucket cylinder 24. As a result, the hydraulic fluid discharged from the hydraulic pump 43 flows into the bottom chamber of the bucket cylinder 24, causing the rod 240 to extend and the bucket 23 to tilt backward.

Conversely, when a drive command signal related to the dump operation (forward tilting operation) of the bucket 23 is output from the controller 5 to the bucket electromagnetic control valves 45A, 45B, the bucket electromagnetic control valves 45A, 45B control the operation of the bucket directional control valve 45 to connect the hydraulic pump 43 and the rod chamber of the bucket cylinder 24. As a result, the hydraulic fluid discharged from the hydraulic pump 43 flows into the rod chamber of the bucket cylinder 24, causing the rod 240 to compress and the bucket 23 to tilt forward.

Here, the control of the bucket 23 operation includes manual control by the operator's manual operation (hereinafter simply referred to as ""bucket manual control"") and automatic control by the controller 5 (hereinafter simply referred to as ""bucket automatic control"").

In bucket manual control, the controller 5 generates a manual command signal based on the operation amount of the bucket control lever 121 operated by the operator and outputs the generated manual command signal to the bucket electromagnetic control valves 45A, 45B. Then, the bucket electromagnetic control valves 45A, 45B control the bucket directional control valve 45 according to the manual command signal output from the controller 5.

It should be noted that the bucket control lever 121 is one aspect of the bucket operation device for operating the bucket 23 and is attached in the operator's cabin 12. This bucket control lever 121 may be attached separately from the operation device for operating the lift arm 21 or may be attached integrally.

Bucket automatic control is particularly used during loading operations to discharge the load (work object) in the bucket 23 to the loading target. In loading operations, since the operator seated in the operator's seat has difficulty seeing inside the bucket 23, skilled technique is required to perform the dump operation while adjusting the discharge weight of the load discharged from the bucket 23. Therefore, by having the controller 5 automatically control the operation of the bucket 23, the burden of the operator's loading operation can be reduced.

When performing bucket automatic control, first, the operator turns on the unloading control start switch 122, which is the automatic control start operation device, to have the controller 5 start the processing related to bucket automatic control. Then, the unloading control start switch 122 outputs the start command signal for bucket automatic control to the controller 5. It should be noted that the unloading control start switch 122 is attached in the operator's cabin 12.

When the controller 5 acquires the start command signal for bucket automatic control output from the unloading control start switch 122, it determines whether the decrease amount in the weight of the load in the bucket 23 has reached the target discharge amount of the bucket 23. Subsequently, the controller 5 generates an automatic command signal based on the determination result and outputs the generated automatic command signal to the bucket electromagnetic control valves 45A, 45B. Then, the bucket electromagnetic control valves 45A, 45B control the bucket directional control valve 45 according to the automatic command signal output from the controller 5.

The weight of the load in the bucket 23 can be calculated based on the pressure applied to each rod chamber and each bottom chamber of the lift arm cylinders 22L, 22R, and the pressure applied to the rod chamber and bottom chamber of the bucket cylinder 24.

The pressure applied to each rod chamber of the lift arm cylinders 22L, 22R is detected by the rod pressure sensor 33A attached to the rod chamber side of one of the lift arm cylinders 22R. Additionally, the pressure applied to each bottom chamber of the lift arm cylinders 22L, 22R is detected by the bottom pressure sensor 33B attached to the bottom chamber side of one of the lift arm cylinders 22R. It should be noted that in Fig. 3, the rod pressure sensor 33A and the bottom pressure sensor 33B are attached to the right lift arm cylinder 22R, but they may be attached to the left lift arm cylinder 22L.

Similarly, the pressure applied to the rod chamber of the bucket cylinder 24 is detected by the rod pressure sensor 34A attached to the rod chamber side of the bucket cylinder 24. Additionally, the pressure applied to the bottom chamber of the bucket cylinder 24 is detected by the bottom pressure sensor 34B attached to the bottom chamber side of the bucket cylinder 24.

The rod pressure sensors 33A and bottom pressure sensors 33B for the lift arm cylinders 22L, 22R, as well as the rod pressure sensor 34A and bottom pressure sensor 34B for the bucket cylinder 24, are each an aspect of the weight sensors that detect the weight in the bucket 23.

The target discharge amount of the bucket 23 is input by the operator into the monitor 123 (input terminal) attached in the operator's cabin 12, and the data is output to the controller 5. If the target discharge amount of the bucket 23 is uniquely determined, it may be stored in the controller 5 in advance.

Hereinafter, in the case where the wheel loader 1 unloads (discharges) the load in the bucket 23 to a loading target such as a dump truck or hopper, the operation control of the bucket 23 based on the weight of the load (work object) in the bucket 23 performed by the controller 5 will be described for each embodiment.

### [First Embodiment]

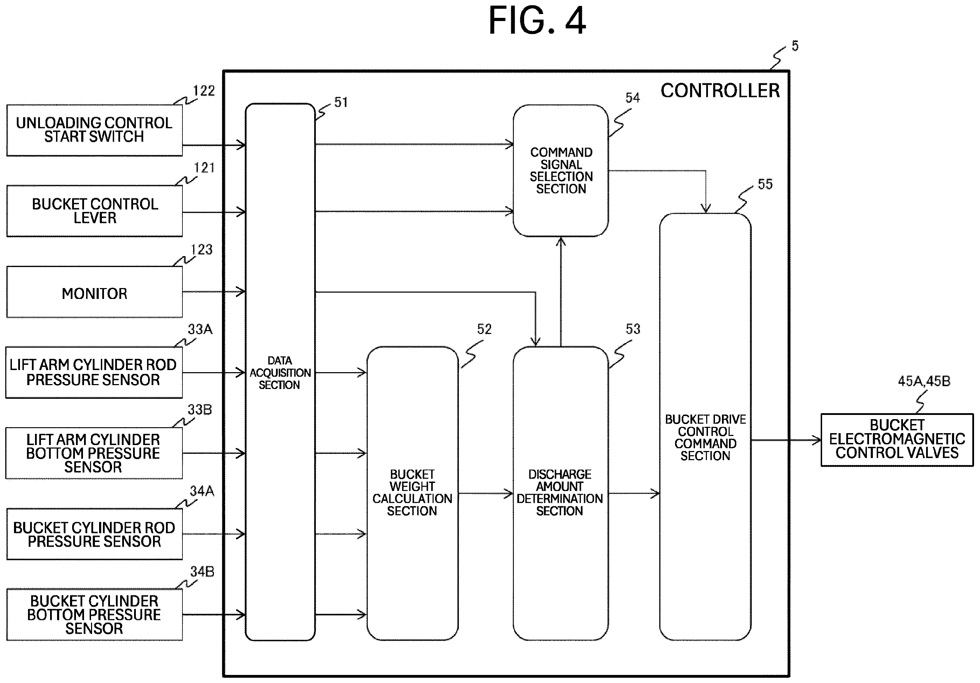

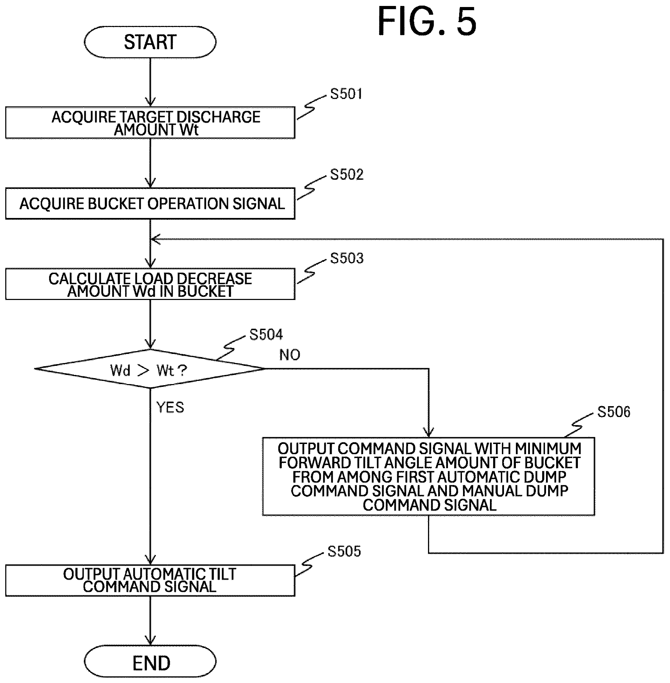

First, the controller 5 according to the first embodiment of the present invention will be described with reference to FIGS. 4 and 5.

FIG. 4 is a functional block diagram showing the functions of the controller 5 according to the first embodiment. FIG. 5 is a flowchart showing the processing flow executed by the controller 5 according to the first embodiment.

The controller 5 is configured with a CPU, RAM, ROM, HDD, input I/F, and output I/F connected to each other via a bus. Various operation devices such as the bucket control lever 121, unloading control start switch 122, and monitor 123, as well as various sensors such as the lift arm cylinder rod pressure sensor 33A, lift arm cylinder bottom pressure sensor 33B, bucket cylinder rod pressure sensor 34A, and bucket cylinder bottom pressure sensor 34B are connected to the input I/F, and the bucket electromagnetic control valves 45A, 45B are connected to the output I/F.

In such a hardware configuration, the CPU reads out the control program (software) stored in a recording medium such as ROM, HDD, or an optical disc and deploys it on the RAM. Then, by executing the deployed control program, the control program and hardware cooperate to realize the functions of the controller 5.

In this embodiment, the configuration of the controller 5 is described as a combination of software and hardware. However, it is not limited to this, and it may be configured using an integrated circuit that realizes the functions of the control program executed on the side of the wheel loader 1.

As shown in FIG. 4, the controller 5 includes a data acquisition section 51, a bucket weight calculation section 52, a discharge amount determination section 53, a command signal selection section 54, and a bucket drive control command section 55.

The data acquisition section 51 acquires the bucket operation signal (including the operation amount of the bucket control lever 121) output from the bucket control lever 121, the start command signal for bucket automatic control output from the unloading control start switch 122, the target discharge amount Wt of the bucket 23 input into the monitor 123, the rod pressure of the lift arm cylinders 22L, 22R detected by the lift arm cylinder rod pressure sensor 33A, the bottom pressure of the lift arm cylinders 22L, 22R detected by the lift arm cylinder bottom pressure sensor 33B, the rod pressure of the bucket cylinder 24 detected by the bucket cylinder rod pressure sensor 34A, and the bottom pressure of the bucket cylinder 24 detected by the bucket cylinder bottom pressure sensor 34B.

The bucket weight calculation section 52 calculates the weight of the load in the bucket 23 based on the rod pressure and bottom pressure of the lift arm cylinders 22L, 22R acquired by the data acquisition section 51, and the rod pressure and bottom pressure of the bucket cylinder 24.

Furthermore, the bucket weight calculation section 52 calculates the load decrease amount Wd in the bucket 23 accompanying the unloading operation based on the weight of the load in the bucket 23 before and after the dump operation. This load decrease amount Wd corresponds to the weight of the load discharged to the loading target.

The discharge amount determination section 53 determines whether the load decrease amount Wd calculated by the bucket weight calculation section 52 has reached the target discharge amount Wt obtained by the data acquisition section 51. The discharge amount determination section 53 may perform a correction equivalent to subtraction against the target discharge amount Wt to ensure that the discharge does not exceed the target discharge amount Wt. For example, the discharge amount determination section 53 corrects the target discharge amount Wt to 0.8 times and determines whether the load decrease amount Wd has reached the value of the target discharge amount Wt multiplied by 0.8. In this case, the controller 5 can terminate control within a range that does not exceed the target discharge amount Wt, and can approach the target discharge amount Wt by performing control multiple times.

As another method to correct the target discharge amount Wt, for example, the controller 5 stores the time difference from when the bucket 23 outputs a command signal for a dumping operation to discharge the load by tilting forward, to when the bucket 23 outputs a command signal for a tilting operation to tilt backward and stop the discharge of the load. Then, the discharge amount determination section 53 multiplies the stored time difference by the change amount per time of the load decrease amount Wd, and performs a correction by subtracting the obtained value from the target discharge amount Wt.

The command signal selection section 54 selects the command signal with a smaller angle amount for the bucket 23 to tilt forward among the first automatic dump command signal and the manual dump command signal in a case where the discharge amount determination section 53 determines that the load decrease amount Wd has not reached the target discharge amount Wt (Wd≦Wt). This ""angle amount"" refers to the amount of angle change per second due to the output of the hydraulic pump 43 or the posture of the bucket 23 during operation of the bucket 23.

Here, the ""first automatic dump command signal"" is a signal commanding the bucket 23 to automatically tilt forward by a predetermined first angle amount, and is independently generated based on a preset operation amount within the controller 5. The "predetermined first angle amount"" is an angle amount that allows the majority of the load in the bucket 23 to be discharged to the loading target in one dump operation, for example, the angle amount when the bucket 23 operates to the most forward-tilted posture.

The ""manual dump command signal"" is a signal commanding the bucket 23 to tilt forward by an angle amount corresponding to the manual operation amount of the bucket control lever 121. Then, the controller 5 generates the ""manual dump command signal"" based on the bucket operation signal from the bucket control lever 121 obtained by the data acquisition section 51.

The bucket drive control command section 55 outputs an automatic tilt command signal to the bucket electromagnetic control valves 45A, 45B in a case where the discharge amount determination section 53 determines that the load decrease amount Wd has reached the target discharge amount Wt (Wd>Wt). This ""automatic tilt command signal"" is a signal commanding the bucket 23 to automatically tilt backward, independently generated within the controller 5 regardless of the operation amount of the bucket control lever 121.

On the other hand, the bucket drive control command section 55 outputs the command signal selected by the command signal selection section 54 to the bucket electromagnetic control valves 45A, 45B in a case where the discharge amount determination section 53 determines that the load decrease amount Wd has not reached the target discharge amount Wt (Wd≦Wt).

As shown in FIG. 5, in the controller 5, first, the data acquisition section 51 acquires the start command signal for bucket automatic control, and then acquires the target discharge amount Wt of the bucket 23 output from the monitor 123 (Step S501).

Next, the data acquisition section 51 acquires the bucket operation signal output from the bucket control lever 121 (Step S502).

Next, the bucket weight calculation section 52 calculates the load decrease amount Wd in the bucket 23 accompanying the unloading operation based on the rod pressure and bottom pressure of the lift arm cylinders 22L, 22R and the rod pressure and bottom pressure of the bucket cylinder 24 obtained by the data acquisition section 51 (Step S503).

Next, the discharge amount determination section 53 determines whether the load decrease amount Wd calculated in Step S503 is greater than the target discharge amount Wt obtained in Step S501 (Step S504).

In Step S504, in a case where the load decrease amount Wd is determined to be greater than the target discharge amount Wt (Wd>Wt) (Step S504/YES), the bucket drive control command section 55 outputs the automatic tilt command signal to the bucket electromagnetic control valves 45A, 45B (Step S505), and the processing in the controller 5 ends.

On the other hand, in Step S504, in a case where the load decrease amount Wd is determined to be less than or equal to the target discharge amount Wt (Wd≦Wt) (Step S504/NO), the command signal selection section 54 selects the command signal with a smaller angle amount for the bucket 23 to tilt forward among the first automatic dump command signal and the manual dump command signal. Then, the bucket drive control command section 55 outputs the command signal selected by the command signal selection section 54 to the bucket electromagnetic control valves 45A, 45B (Step S506), and the processing in the controller 5 ends.

In this way, after obtaining the start command signal for automatic bucket control, in a case where a bucket operation signal is received from the bucket control lever 121, the controller 5 outputs the command signal with the smaller angle amount of forward tilt of the bucket 23, from either the first automatic dump command signal or the manual dump command signal, to the bucket electromagnetic control valves 45A, 45B. This adjusts the balance between the discharge time and the discharge amount accuracy of the load.

In the discharge operation of the load to the loading target, the smaller the angle amount for the bucket 23 to tilt forward, i.e., the command value of the dump command signal, the longer the time it takes for the bucket 23 to discharge the load, but it is possible to discharge the target discharge amount Wt accurately. Conversely, the larger the angle amount for the bucket 23 to tilt forward (command value of the dump command signal), the more difficult it becomes to discharge the target discharge amount Wt accurately, but the time it takes for the bucket 23 to discharge the load can be shortened.

This balance between the discharge time and the accuracy of the discharge amount is also affected by the type of work object (e.g., fine sand, large rock formations, various shapes of minerals) and its condition (e.g., wet, dry), i.e., the properties of the work object. For example, when tilting the bucket 23 forward at the same angle amount, the discharge time and accuracy of the discharge amount differ between loose earth and sand and clay containing a lot of moisture.

When performing the discharge operation of the load to the loading target manually by the operator, the operator can adjust the operation amount of the bucket control lever 121 according to the properties of the work object to balance the discharge time and accuracy of the discharge amount. However, when performing the discharge operation of the load to the loading target by bucket automatic control, it is difficult to adjust the balance between the discharge time and accuracy of the discharge amount according to the properties of the work object.

However, in the controller 5, among the first automatic dump command signal and the manual dump command signal, the command signal with a smaller angle amount for the bucket 23 to tilt forward is selected and output to the bucket electromagnetic control valves 45A, 45B. Therefore, it is possible to adjust the balance between the discharge time and accuracy of the discharge amount according to the properties of the work object discharged from the bucket 23.

As described above, in the wheel loader 1 according to this embodiment, while achieving accurate loading of the load with the target loading weight (target discharge amount Wt) to the loading target, the bucket 23 is operated in accordance with the properties of the load, thereby preventing unnecessary large movements of the bucket 23 and reducing the load on the hydraulic drive device 402.

### [Second Embodiment]

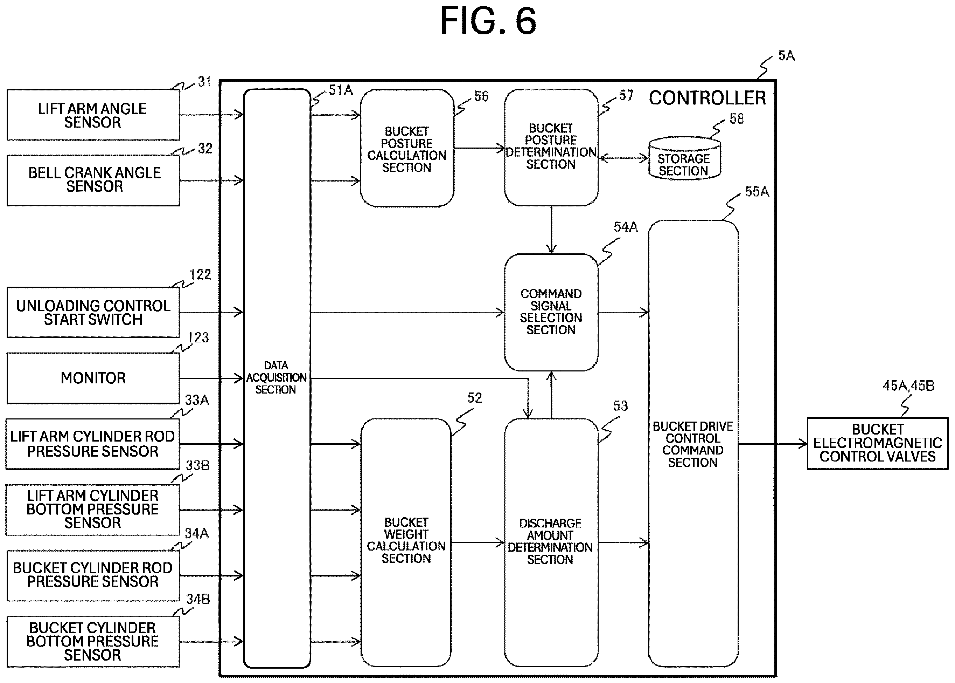

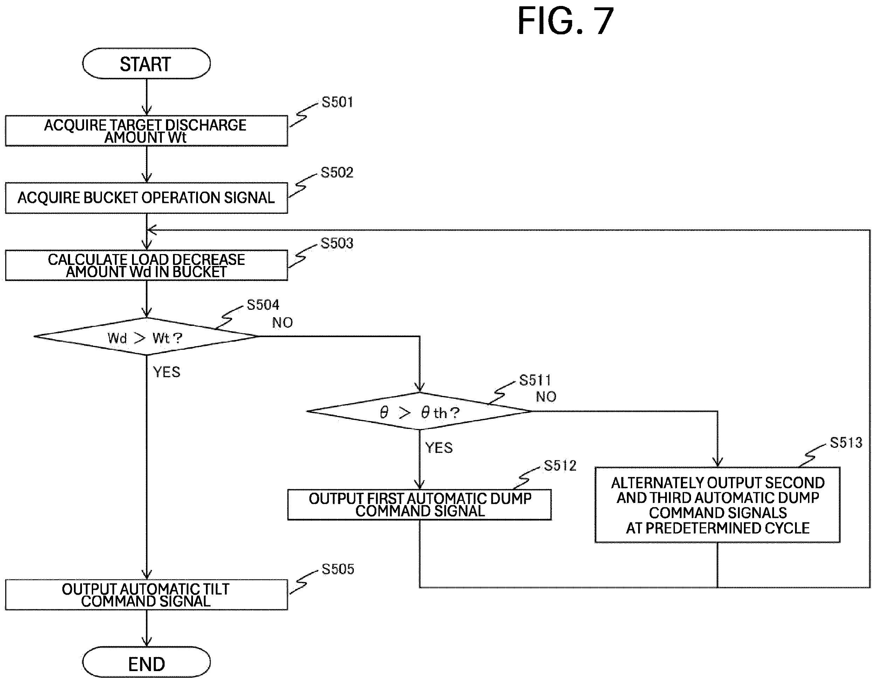

Next, the controller 5A according to the second embodiment of the present invention will be described with reference to FIGS. 6 and 7. In FIGS. 6 and 7, components common to those described in the first embodiment are denoted by the same reference numerals, and their description is omitted. The same applies to the third embodiment and subsequent embodiments.

FIG. 6 is a functional block diagram showing the functions of the controller 5A according to the second embodiment. FIG. 7 is a flowchart showing the processing flow executed by the controller 5A according to the second embodiment.

In this embodiment, unlike the first embodiment, after the start command signal for bucket automatic control is input to the controller 5A (after the bucket automatic control is started), no bucket operation signal from the bucket control lever 121 is input. Therefore, the operation of discharging the load in the bucket 23 to the loading target is entirely performed by the bucket automatic control of the controller 5A.

As shown in FIG. 6, the controller 5A includes a data acquisition section 51A, a bucket weight calculation section 52, a discharge amount determination section 53, a command signal selection section 54A, and a bucket drive control command section 55A, in addition to a bucket posture calculation section 56, a bucket posture determination section 57, and a storage section 58.

The data acquisition section 51A acquires the start command signal for bucket automatic control output from the unloading control start switch 122, the target discharge amount Wt of the bucket 23 input to the monitor 123, the rod pressure of the lift arm cylinders 22L, 22R detected by the lift arm cylinder rod pressure sensor 33A, the bottom pressure of the lift arm cylinders 22L, 22R detected by the lift arm cylinder bottom pressure sensor 33B, the rod pressure of the bucket cylinder 24 detected by the bucket cylinder rod pressure sensor 34A, the bottom pressure of the bucket cylinder 24 detected by the bucket cylinder bottom pressure sensor 34B, the lift arm angle detected by the lift arm angle sensor 31, and the bell crank angle detected by the bell crank angle sensor 32.

The bucket posture calculation section 56 calculates the bucket 23 angle (posture) θ based on the lift arm angle and bell crank angle acquired by the data acquisition section 51A.

The bucket posture determination section 57 determines whether the bucket angle θ calculated by the bucket posture calculation section 56 is greater than a predetermined angle threshold θth in a case where it is determined by the discharge amount determination section 53 that the load decrease amount Wd has not reached the target discharge amount Wt (Wd≦Wt).

Here, the "predetermined angle threshold θth" is the angle of the bucket 23 when the bottom section faced on the ground side of the vehicle body in the bucket 23 becomes horizontal with respect to the ground surface (as shown in FIG. 2), and is set to, for example, 0° and stored in the storage section 58. The posture of the bucket 23 when the bottom section of the bucket 23 becomes horizontal with respect to the ground surface is the reference horizontal posture for the posture of the bucket 23.

For example, in a case where the bucket angle θ when the bucket 23 is in a horizontal posture is set to 0° (angle threshold θth=0), a positive (+) bucket angle θ indicates that the bucket 23 is in a tilt posture relative to the horizontal posture, and a negative (-) bucket angle θ indicates that the bucket 23 is in a dump posture relative to the horizontal posture.

That is, the bucket posture determination section 57 determines whether the posture of the bucket 23 is more tilted backward than the horizontal posture in a case where it is determined by the discharge amount determination section 53 that the load decrease amount Wd has not reached the target discharge amount Wt (Wd≦Wt).

The command signal selection section 54A selects the first automatic dump command signal in a case where it is determined by the bucket posture determination section 57 that the posture of the bucket 23 is more tilted backward than the horizontal posture (θ>θth).

On the other hand, the command signal selection section 54A selects the second automatic dump command signal and the third automatic dump command signal in a case where it is determined by the bucket posture determination section 57 that the posture of the bucket 23 is either horizontal or more tilted forward than the horizontal posture (θ≦θth).

The "second automatic dump command signal" is a signal that commands the second automatic dump operation in which the bucket 23 automatically tilts forward by a second angle amount that is less than or equal to the first angle amount, and is independently generated based on a preset operation amount in the controller 5.

Therefore, the operation of the bucket 23 in response to the second automatic dump command signal is an operation that tilts forward by the same angle amount as the angle amount in response to the first automatic dump command signal, or by a smaller angle amount than the angle amount in response to the first automatic dump command signal. Therefore, in this case, the load decrease amount Wd is the same as or less than when operated in response to the first automatic dump command signal.

Additionally, the "third automatic dump command signal" is a signal that commands the third automatic dump operation in which the bucket 23 automatically tilts forward by a third angle amount that is smaller than the second angle amount, and is independently generated based on a preset operation amount in the controller 5.

Therefore, the operation of the bucket 23 in response to the third automatic dump command signal is an operation that tilts forward by a smaller angle amount than the angle amount in response to the second automatic dump command signal. Therefore, in this case, the load decrease amount Wd is less than when operated in response to the second automatic dump command signal.

The bucket drive control command section 55A outputs the first automatic dump command signal selected by the command signal selection section 54A to the bucket electromagnetic control valves 45A, 45B in a case where it is determined by the bucket posture determination section 57 that the posture of the bucket 23 is more tilted backward than the horizontal posture (θ>θth).

Additionally, the bucket drive control command section 55A alternately outputs the second automatic dump command signal and the third automatic dump command signal selected by the command signal selection section 54A to the bucket electromagnetic control valves 45A, 45B at a predetermined cycle (e.g., 0.3 seconds) in a case where it is determined by the bucket posture determination section 57 that the posture of the bucket 23 is either horizontal or more tilted forward than the horizontal posture (θ≦θth).

The "predetermined cycle" is set based on the time from when the command signal is output from the controller 5A until the bucket electromagnetic control valves 45A, 45B actually operate.

Furthermore, the alternate output of the second automatic dump command signal and the third automatic dump command signal from the controller 5A may be an output according to a step function or an output according to a sine function (sin function).

As shown in FIG. 7, the processing from step S501 to step S504 in the controller 5A is the same as that of the controller 5 according to the first embodiment. And, in step S504, even if it is determined that the load decrease amount Wd is greater than the target discharge amount Wt (Wd>Wt) (step S504/YES), similar to the controller 5 according to the first embodiment, the process proceeds to step S505 where the bucket drive control command section 55A outputs the automatic tilt command signal to the bucket electromagnetic control valves 45A, 45B, and the processing in the controller 5A is completed.

On the other hand, in a case where it is determined in step S504 that the load decrease amount Wd is less than or equal to the target discharge amount Wt (Wd≦Wt) (step S504/NO), the bucket posture determination section 57 determines whether the bucket angle θ calculated by the bucket posture calculation section 56 is greater than the predetermined angle threshold θth, that is, whether the bucket 23 is more tilted backward than the horizontal posture (step S511).

If it is determined in step S511 that the bucket angle θ is greater than the predetermined angle threshold θth (θ>θth) (step S511/YES), the bucket drive control command section 55A outputs the first automatic dump command signal selected by the command signal selection section 54A to the bucket electromagnetic control valves 45A, 45B (step S512). Subsequently, in the controller 5A, the process returns to step S503, and the processing is repeated.

On the other hand, in a case where it is determined in step S511 that the bucket angle θ is less than or equal to the predetermined angle threshold θth (θ≦θth) (step S511/NO), the bucket drive control command section 55A alternately outputs the second automatic dump command signal and the third automatic dump command signal selected by the command signal selection section 54A to the bucket electromagnetic control valves 45A, 45B at a predetermined cycle (step S513). Subsequently, in the controller 5A, the process returns to step S503, and the processing is repeated.

In this manner, in this embodiment, when the posture of the bucket 23 is more tilted backward than the horizontal posture, the bucket 23 is significantly tilted forward in response to the first automatic dump command signal, thereby discharging most of the load in the bucket 23 to the loading target and improving work efficiency.

On the other hand, when the posture of the bucket 23 is the same as the horizontal posture or is tilted forward compared to the horizontal posture, the bucket 23 is tilted forward while being vibrated according to the second and third automatic dump command signals alternately output from the controller 5A, thereby inducing the collapse of the load inside the bucket 23. As a result, the load inside the bucket 23 continues to be discharged to the loading target at a constant rate, making it possible to enhance the accuracy of the discharge amount without taking time for the discharge of the load.

Thus, in the wheel loader 1 according to this embodiment, the content of the dump operation of the bucket 23 is switched according to the posture of the bucket 23, allowing for efficient discharge of the load inside the bucket 23 while accurately loading the target loading weight (target discharge amount Wt) to the loading target.

In this embodiment, the operation of the bucket 23 includes variations such as the angle of forward tilt differing according to the posture of the bucket 23, or tilting forward while generating vibrations due to frequent changes in tempo. However, since the bucket 23 continues to tilt forward without stopping or tilting backward during operation, it is possible to improve the accuracy of the discharge amount of the load without causing discomfort to the operator.

### [Third Embodiment]

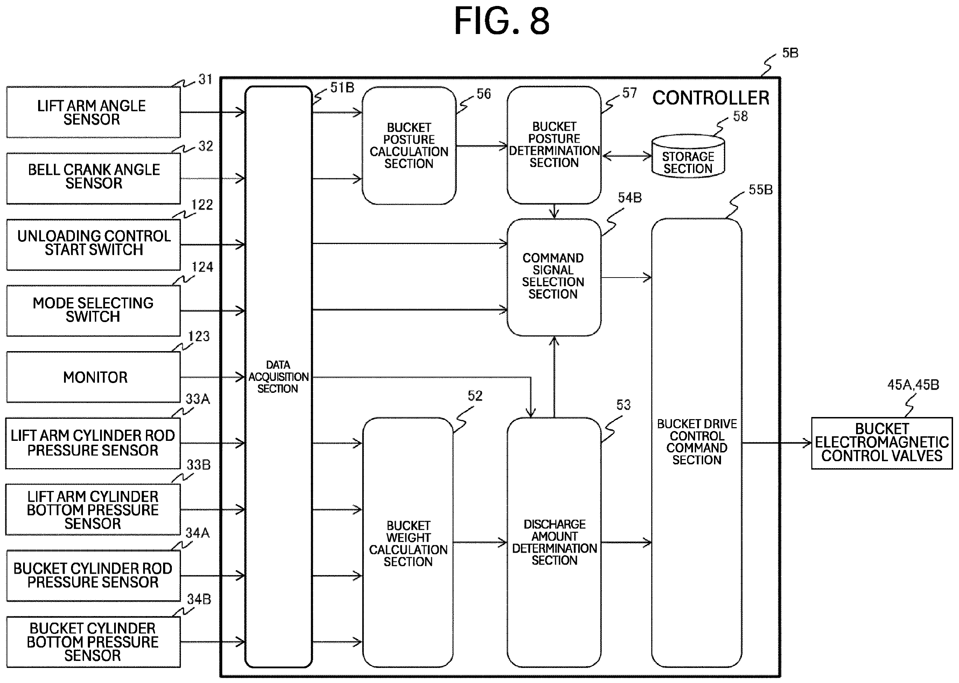

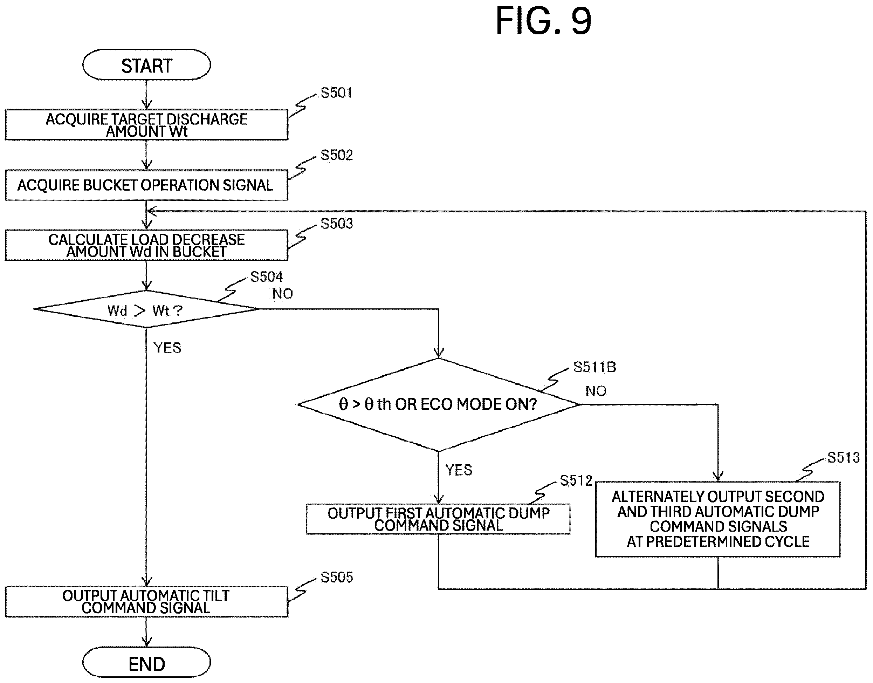

Next, the controller 5B according to the third embodiment of the present invention will be described with reference to FIGS. 8 and 9.

FIG. 8 is a functional block diagram showing the functions of the controller 5B according to the third embodiment. FIG. 9 is a flowchart showing the processing flow executed by the controller 5B according to the third embodiment.

As shown in FIG. 8, the controller 5B according to this embodiment includes, similar to the controller 5A according to the second embodiment, a data acquisition section 51B, a bucket weight calculation section 52, a discharge amount determination section 53, a command signal selection section 54B, a bucket drive control command section 55B, a bucket posture calculation section 56, a bucket posture determination section 57, and a storage section 58.

In this embodiment, unlike the second embodiment, the data acquisition section 51B further acquires a switching signal from the mode selecting switch 124. This mode selecting switch 124 limits the upper limit of the speed of the engine 40 and switches to an eco mode (engine limit control mode) that reduces fuel consumption by driving the engine 40 in a low idle state, even if the accelerator pedal is fully open.

As shown in FIG. 9, the processing from step S501 to step S505 in the controller 5B is the same as that in the controller 5 according to the first embodiment and the controller 5A according to the second embodiment.

On the other hand, in step S504, in a case where it is determined that the load decrease amount Wd is less than or equal to the target discharge amount Wt (Wd≦Wt) (step S504/NO), the controller 5B determines whether the bucket angle θ is greater than a predetermined angle threshold θth at the bucket posture determination section 57, or whether the eco mode switching signal output from the mode selecting switch 124 has been acquired at the data acquisition section 51B (step S511B).

In step S511B, in a case where it is determined that the bucket angle θ is greater than the predetermined angle threshold θth (θ>θth), or that the eco mode has been switched on at the mode selecting switch 124 (eco mode ON; engine limit control is enable) (step S511B/YES), the process proceeds to step S512. Then, the bucket drive control command section 55B outputs the first automatic dump command signal selected by the command signal selection section 54B to the bucket electromagnetic control valves 45A, 45B.

On the other hand, in step S511B, in a case where it is determined that the bucket angle θ is less than or equal to the predetermined angle threshold θth (θ≦θth), and that the eco mode is off at the mode selecting switch 124 (eco mode OFF; engine limit control is disable) (step S511B/NO), the process proceeds to step S513. Then, the bucket drive control command section 55B alternately outputs the second and third automatic dump command signals selected by the command signal selection section 54B to the bucket electromagnetic control valves 45A, 45B at a predetermined cycle.

Thus, in this embodiment, when the eco mode is on, even if the posture of the bucket 23 is the same as the horizontal posture or is a forward-tilted posture compared to the horizontal posture, control to vibrate the bucket 23 at a predetermined cycle is not performed.

When the eco mode is on, that is, when the low fuel consumption mode is enable, it is a case where high driving force is not required for the engine 40, and it is assumed that the work object is such that excavation is possible even with a small traction force of the wheel loader 1, such as sand or gravel. Such work objects are not only easy to excavate but also prone to collapse inside the bucket 23 during discharge to the loading target, so it is possible to accurately load the load without vibrating the bucket 23 at a predetermined cycle.

Thus, when the load discharged to the loading target is a work object prone to collapse inside the bucket 23, the bucket 23 is greatly tilted forward according to the first automatic dump command signal, regardless of the posture of the bucket 23. This makes it possible to improve the accuracy of the discharge amount of the load while shortening the discharge time.

### [Fourth Embodiment]

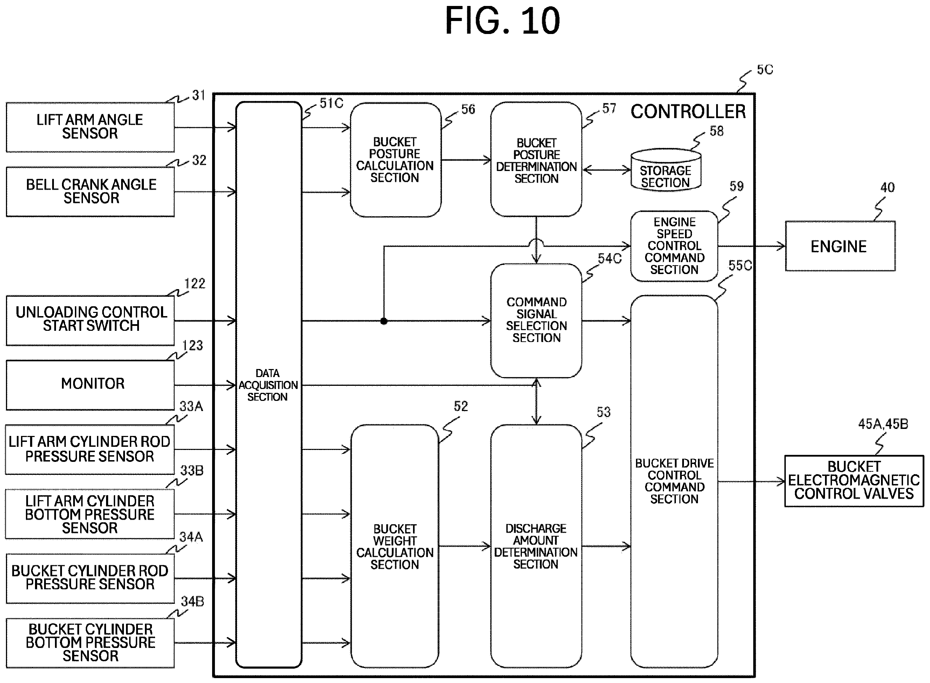

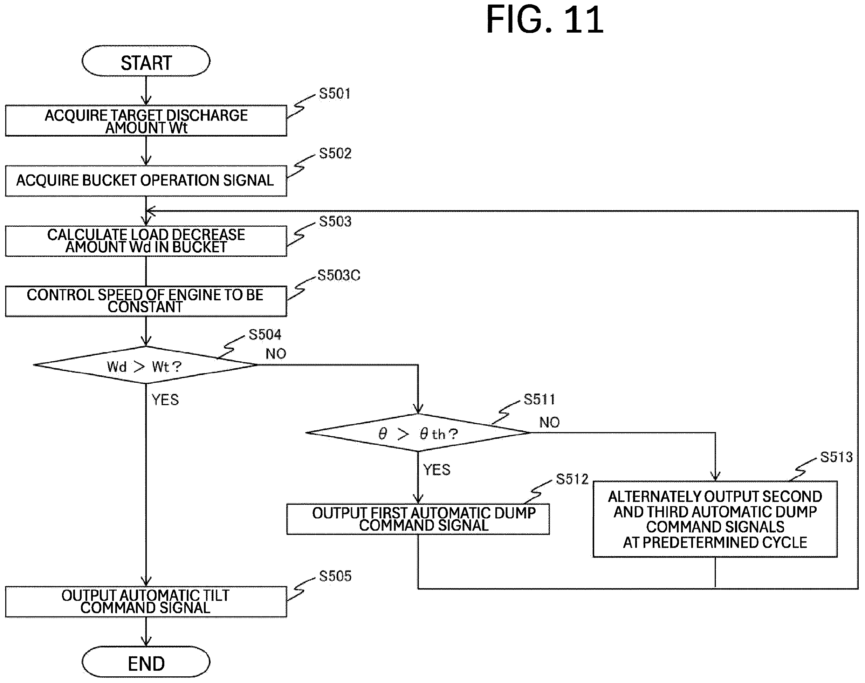

Next, the controller 5C according to the fourth embodiment of the present invention will be described with reference to FIGS. 10 and 11.

FIG. 10 is a functional block diagram showing the functions of the controller 5C according to the fourth embodiment. FIG. 11 is a flowchart showing the processing flow executed by the controller 5C according to the fourth embodiment.

As shown in FIG. 10, the controller 5C according to this embodiment includes a data acquisition section 51C, a bucket weight calculation section 52, a discharge amount determination section 53, a command signal selection section 54C, a bucket drive control command section 55C, a bucket posture calculation section 56, a bucket posture determination section 57, a storage section 58, and an engine speed control command section 59.

In this embodiment, unlike the second embodiment, when the data acquisition section 51C acquires the start command signal for bucket automatic control output from the unloading control start switch 122, the engine speed control command section 59 outputs the speed maintenance command signal to the engine 40.

Here, the "speed maintenance command signal" is a signal related to a command to maintain the speed of the engine 40 at a predetermined speed. This "predetermined speed" is a speed that can be arbitrarily set according to the specifications of the wheel loader 1, and is set, for example, to the speed when the engine 40 is in a low idle state.

As shown in FIG. 11, the processing from step S501 to step S503 in the controller 5C is the same as that in the controllers 5, 5A, and 5C according to the first to third embodiments. In step S503, when the load decrease amount Wd due to the unloading operation is calculated, the engine speed control command section 59 subsequently outputs the speed maintenance command signal to the engine 40 and controls the speed of the engine 40 to be constant (step S503C).

The processing after step S503C is the same as that in the controller 5A according to the second embodiment.

Thus, in this embodiment, after the bucket automatic control is started, the speed of the engine 40 is controlled to be constant. Therefore, the operation control of the bucket 23 based on each automatic dump command signal output from the bucket drive control command section 55C is performed without being affected by changes in the speed of the engine 40. As a result, it is possible to discharge the load inside the bucket 23 with higher accuracy.

### [Fifth Embodiment]

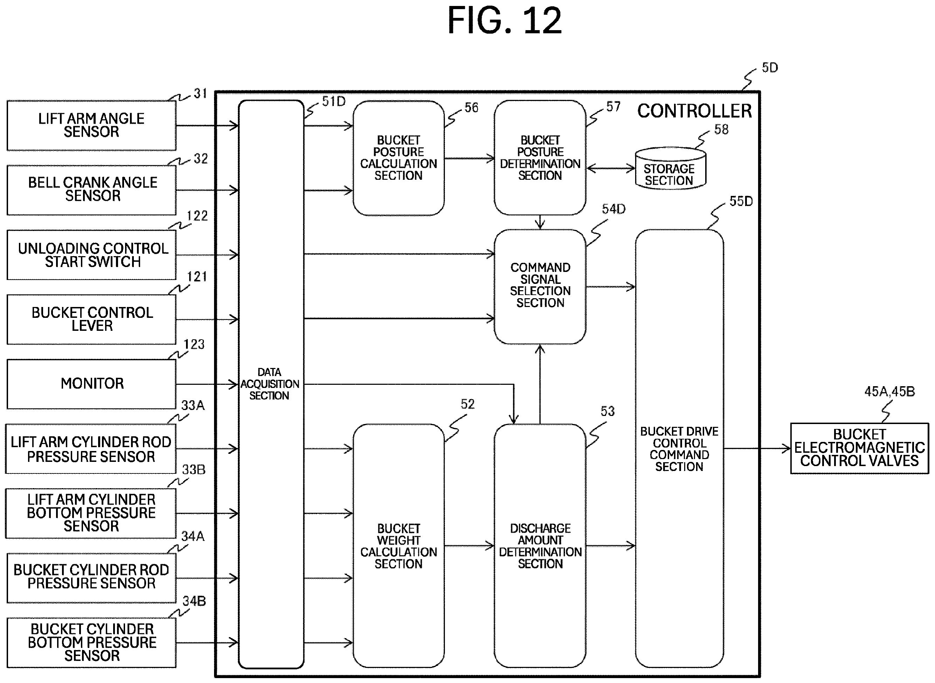

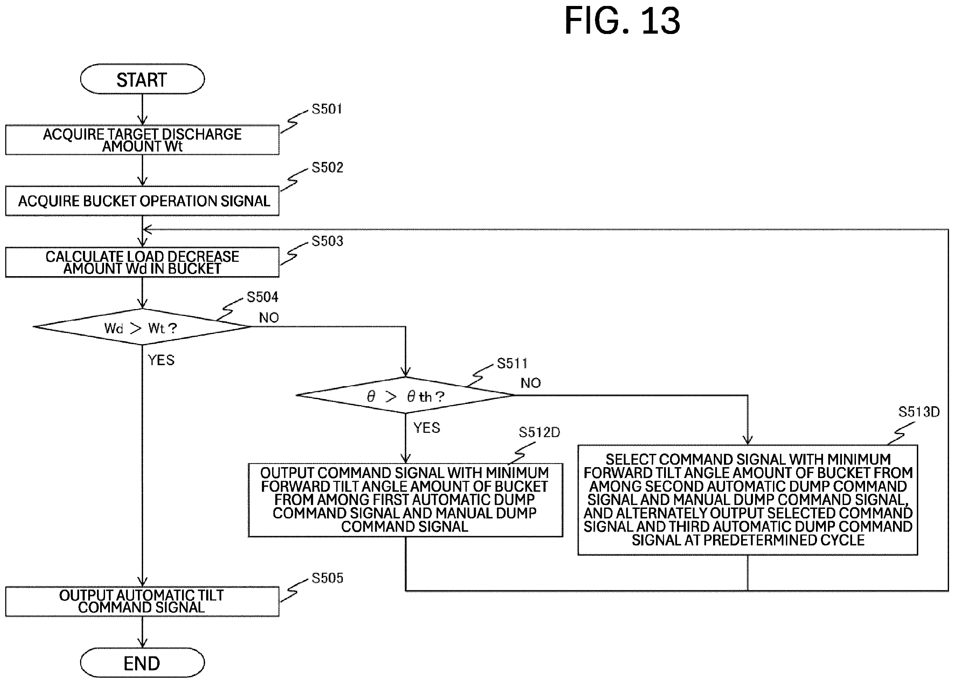

Next, the controller 5D according to the fifth embodiment of the present invention will be described with reference to FIGS. 12 and 13.

FIG. 12 is a functional block diagram showing the functions of the controller 5D according to the fifth embodiment. FIG. 13 is a flowchart showing the processing flow executed by the controller 5D according to the fifth embodiment.

In the controller 5D according to this embodiment, processing that combines the processing performed by the controller 5 according to the first embodiment and the processing performed by the controller 5A according to the second embodiment is performed.

As shown in FIG. 12, the controller 5D includes, similar to the controller 5A according to the second embodiment, a data acquisition section 51D, a bucket weight calculation section 52, a discharge amount determination section 53, a command signal selection section 54D, a bucket drive control command section 55D, a bucket posture calculation section 56, a bucket posture determination section 57, and a storage section 58.

In the controller 5D according to this embodiment, as shown in FIG. 13, the processing after step S511 (steps S512D and S513D) differs from the processing performed by the controller 5A according to the second embodiment (steps S512 and S513), but the other processing is the same as the processing performed by the controller 5A according to the second embodiment.

Specifically, in step S511, in a case where it is determined that the bucket angle θ is greater than a predetermined angle threshold θth (θ>θth) (step S511/YES), the command signal selection section 54D selects the command signal with the smaller forward tilt angle amount of the bucket 23 from among the first automatic dump command signal and the manual dump command signal. Subsequently, the bucket drive control command section 55D outputs the command signal selected by the command signal selection section 54D to the bucket electromagnetic control valves 45A, 45B (step S512D).

On the other hand, in step S511, in a case where it is determined that the bucket angle θ is less than or equal to the predetermined angle threshold θth (θ≦θth) (step S511/NO), the command signal selection section 54D selects the command signal with the smaller forward tilt angle amount of the bucket 23 from among the second automatic dump command signal and the manual dump command signal. Subsequently, the bucket drive control command section 55D alternately outputs the command signal selected by the command signal selection section 54D and the third automatic dump command signal to the bucket electromagnetic control valves 45A, 45B at a predetermined cycle (step S513D).

As a result, in this embodiment, it is possible to achieve both the actions and effects of the first embodiment and the actions and effects of the second embodiment.

The embodiments of the present invention have been described above. It should be noted that the present invention is not limited to the above-described embodiments, and various other modifications are included. For example, the above-described embodiments have been described in detail to clearly explain the present invention, and are not necessarily limited to those having all the described configurations. Furthermore, it is possible to replace part of the configuration of each of the above-described embodiments with the configuration of another embodiment, and it is also possible to add the configuration of another embodiment to the configuration of each of the above-described embodiments. Moreover, it is possible to add, delete, or replace part of the configuration of each of the above-described embodiments with other configurations.

For example, in a case where the controllers 5, 5A, 5B, 5C, 5D determine that the load decrease amount Wd associated with the unloading operation has not reached the target discharge amount Wt (Wd≦Wt), they may select the command signal with the smaller forward tilt angle amount of the bucket 23 from among the dump command signals that command a dump operation in which the bucket 23 tilts forward by an angle amount different from the first angle amount, and output it to the bucket electromagnetic control valves 45A, 45B. As a result, the wheel loader 1 can accurately load the target load weight to the loading target while reducing the discomfort to the operator and the load on the hydraulic drive device 402.

In the above embodiments, the wheel loader 1 makes use of a torque converter type drive system, but it is not limited to this and may make use of an HST type drive system.

### Reference Signs List

1: Wheel loader
5,5A,5B,5C,5D: Controller
23: Bucket
31: Lift arm angle sensor (bucket posture sensor)
32: Bell crank angle sensor (bucket posture sensor)
33A: Lift arm cylinder rod pressure sensor (weight sensor)
33B: Lift arm cylinder bottom pressure sensor (weight sensor)
34A: Bucket cylinder rod pressure sensor (weight sensor)
34B: Bucket cylinder bottom pressure sensor (weight sensor)
40: Engine
121: Bucket control lever (bucket operation device)
122: Unloading control start switch (automatic control start operation device)
402: Hydraulic drive device
Wd: Decrease amount
Wt: Target discharge amount

## Claims

1. A wheel loader comprising;
a vehicle body, a working device attached at the front of the vehicle body, a bucket attached to the tip of the working device, a hydraulic drive device for driving the bucket, a power source for driving the hydraulic drive device, a weight sensor for detecting the weight in the bucket, a controller for performing automatic bucket control based on the weight detected by the weight sensor, and an automatic control start operation device for the controller to start processing related to the automatic bucket control;
wherein the controller, upon acquiring the start command signal of the bucket automatic control output from the automatic control start operation device, calculates the decrease amount of the weight of the work object in the bucket accompanying the unloading operation based on the weight of the work object detected by the weight sensor;
then, the controller determines whether the calculated decrease amount has reached the target discharge amount of the bucket, and in a case where it is determined that the calculated decrease amount has reached the target discharge amount, outputs an automatic tilt command signal to tilt the bucket backward to the hydraulic drive device,
and, in a case where the controller determines that the calculated decrease amount has not reached the target discharge amount, it selects the command signal with the smaller angle amount of forward tilt of the bucket from the preset first automatic dump command signal that commands the first automatic dump operation where the bucket automatically tilts forward by a predetermined first angle amount, and the dump command signal that commands the dump operation where the bucket tilts forward by an angle amount different from the first angle amount, and outputs it to the hydraulic drive device to control the bucket.

2. The wheel loader according to claim 1;
wherein the wheel loader further includes a bucket operation device for manipulating the bucket;
and the dump command signal includes a manual dump command signal based on the operation amount of the bucket operation device.

3. The wheel loader according to claim 2;
wherein the wheel loader further comprises a bucket posture sensor for detecting the posture of the bucket;
the dump command signal further includes a preset second automatic dump command signal that commands a second automatic dump operation in which the bucket automatically tilts forward by a second angle amount that is less than or equal to the first angle amount, and a preset third automatic dump command signal that commands a third automatic dump operation in which the bucket automatically tilts forward by a third angle amount that is smaller than the second angle amount;
the controller further determines whether the posture of the bucket detected by the bucket posture sensor is tilted backward compared to the horizontal posture of the bucket, where the bottom section faced on the ground contact side of the vehicle body in the bucket is horizontal to the ground surface, in a case where it is determined that the calculated decrease amount has not reached the target discharge amount;
then, in a case where the controller determines that the posture of the bucket is more backward than the horizontal posture, it selects the command signal with the smaller angle amount of the bucket from the first automatic dump command signal or the manual dump command signal, and outputs it to the hydraulic drive device;
and, in a case where the controller determines that the posture of the bucket is not more backward than the horizontal posture, it selects the command signal with the smaller angle amount of forward tilt of the bucket from the second automatic dump command signal and the manual dump command signal, and alternately outputs the selected command signal and the third automatic dump command signal to the hydraulic drive device at a predetermined cycle.

4. The wheel loader according to claim 1;
wherein the wheel loader further comprises a bucket posture sensor for detecting the posture of the bucket;
the dump command signal includes a preset second automatic dump command signal that commands a second automatic dump operation in which the bucket automatically tilts forward by a second angle amount that is less than or equal to the first angle amount, and a preset third automatic dump command signal that commands a third automatic dump operation in which the bucket automatically tilts forward by a third angle amount that is smaller than the second angle amount;
the controller further determines whether the posture of the bucket detected by the bucket posture sensor is tilted backward compared to the horizontal posture of the bucket, where the bottom section faced on the ground contact side of the vehicle body in the bucket is horizontal to the ground surface, in a case where it is determined that the calculated decrease amount has not reached the target discharge amount;
and then, the controller outputs the first automatic dump command signal to the hydraulic drive device in a case where it determines that the posture of the bucket is tilted backward more than the horizontal posture, and in a case where it determines that the posture of the bucket is not tilted backward more than the horizontal posture, it alternately outputs the second automatic dump command signal and the third automatic dump command signal to the hydraulic drive device at a predetermined cycle.

5. The wheel loader according to claim 4;
wherein the controller is capable of performing engine limit control to limit the engine speed of the power source;
in a case where it is determined that the calculated decrease amount has not reached the target discharge amount, and it is determined that the posture of the bucket is more backward than the horizontal posture, or in a case where it is determined that the engine limit control in the controller is enable, the controller outputs the first automatic dump command signal to the hydraulic drive device;
and then, in a case where it is determined that the calculated decrease amount has not reached the target discharge amount, and it is determined that the posture of the bucket is not more backward than the horizontal posture, and the engine limit control in the controller is determined to be disable, the controller outputs the second automatic dump command signal and the third automatic dump command signal alternately to the hydraulic drive device at a predetermined cycle.

6. The wheel loader according to claim 4;
wherein the controller, upon acquiring the start command signal of the bucket automatic control output from the automatic control start operation device, outputs a speed maintenance command signal to the engine to maintain the engine speed of the power source at a predetermined speed.
